# FASCICULE DE BREVET EUROPEEN

(11) **EP 0 838 658 B1**
(45) Date de publication et mention de la délivrance du brevet: **30.05.2001**
(21) Numéro de dépôt: 97402515.7
(22) Date de dépôt: 23.10.1997
(51) Int. Cl.: G01B 7/34, G01N 27/00

(54) **Capteur à effet tunnel, notamment pour relever la topographie d'une surface**
Tunneleffektsensor, insbesondere zum Bestimmen der Topographie einer Oberfläche
Tunnel effect sensor, particularly for measuring the topography of a surface

(30) Priorité: 24.10.1996 FR 9612991
(43) Date de publication de la demande: 29.04.1998
(73) Titulaire: C.S.E.M. CENTRE SUISSE D'ELECTRONIQUE ET DE MICROTECHNIQUE SA, 2007 Neuchâtel (CH)
(72) Inventeur: Niedermann, Philipp, 2000 Neuchatel (CH)
(74) Mandataire: Caron, Gérard

(56) Documents cités:
- EP-A- 0 262 253
- EP-A- 0 389 115
- EP-A- 0 703 429
- US-A- 5 307 693
- D.A.GRIGG ET AL: "Rocking-beam force-balance approach to atomic force microscopy" ULTRAMICROSCOPY, vol. 42-44,Part B, juillet 1992, AMSTERDAM , NL, pages 1504-1508, XP000444162
- NOBUHIRO KATO ET AL: "FORCE-BALANCING FORCE SENSOR WITH AN OPTICAL LEVER" REVIEW OF SCIENTIFIC INSTRUMENTS, vol. 66, no. 12, 1 décembre 1995, pages 5532-5536, XP000551249
- RIETHMUELLER W ET AL: "THERMALLY EXCITED SILICON MICROACTUATORS" IEEE TRANSACTIONS ON ELECTRON DEVICES, vol. 35, no. 6, juin 1988, pages 758-763, XP000646394

## Description

La présente invention est relative à un capteur à effet tunnel destiné notamment à être utilisé dans les microscopes dits à force atomique.

Un capteur de ce type a été décrit dans le brevet EP 0 262 253 et représenté notamment à la figure 9 de ce document.

Plus précisément, dans ce cas, l'échantillon à examiner est placé sur une embase mobile selon trois axes perpendiculaires X, Y et Z. La tête de mesure comprend une pointe tactile qui suit la surface à examiner et qui est portée par un bras en porte-à-faux. L'extrémité libre de cette dernière peut se déplacer par rapport à un bras fixe s'étendant parallèlement au bras en porte-à-faux sous l'action d'une force électrostatique engendrée par des armatures de condensateur prévues respectivement sur les deux bras. Sur les extrémités libres de ceux-ci sont en outre prévues des protubérances entre lesquelles est établi un courant tunnel, pouvant être réglé en faisant varier la distance entre les deux protubérances à l'aide d'une tension établie entre les armatures de condensateur.

Pour examiner la topographie de la surface d'un échantillon, la pointe tactile est amenée proche de l'échantillon par un déplacement en Z par exemple, de l'embase porte-échantillon. La distance entre la pointe tactile et la surface à examiner est alors ajustée avec précision pour faire interagir la pointe tactile et la surface à examiner, la force d'interaction provoquant des changements dans le courant tunnel qui s'écoule entre les deux protubérances. La surface à examiner est alors explorée en déplaçant l'échantillon selon les axes X et Y.

Lorsqu'un creux ou une aspérité est rencontré par la pointe tactile, le bras en porte-à-faux subit une déflexion ce qui modifie la distance entre les deux protubérances et par conséquent le courant tunnel entre elles. Celui-ci étant comparé en permanence à une valeur de consigne, un signal d'erreur est engendré. Ce dernier est alors utilisé pour provoquer un déplacement en Z du porte-échantillon permettant de compenser l'erreur. Le signal de réaction nécessaire à cet effet est utilisé en même temps comme grandeur rendant compte de la "hauteur" locale correspondante de la surface à examiner.

En effectuant ainsi un balayage de cette surface, les signaux de réaction successivement relevés vont pouvoir être utilisés pour tracer des courbes de niveau de cette surface.

On voit ainsi que la distance entre les deux protubérances des poutres (typiquement de l'ordre du nanomètre) doit être corrigée constamment par la commande de déplacement en Z du porte-échantillon. Ceci est une contrainte extrêmement sévère imposée à la précision du dispositif de déplacement du porte-échantillon, qui doit en outre assurer avec une grande précision les déplacements de celui-ci selon les deux autres axes X et Y.

Cette contrainte est d'autant plus sévère que la distance entre la pointe où se produit l'effet tunnel et son électrode ne peut varier que de quelques nanomètres pour que l'effet tunnel soit toujours mesurable.

Un autre inconvénient de ce dispositif antérieur réside dans le fait que les protubérances risquent de se heurter par un déplacement exagéré malencontreux du porte-échantillon, ce qui pourrait endommager gravement le capteur.

Enfin, l'ensemble des poutres est placé devant le porte-échantillon et encombre ainsi le champ de vision en dessous de la pointe tactile rendant ainsi difficile une observation visuelle convenable de la région où se trouve l'échantillon et le porte-échantillon, à l'aide des instruments habituels.

L'invention a pour but de fournir un capteur à effet tunnel dépourvu des inconvénients que l'on vient de citer.

L'invention a donc pour objet un capteur à effet tunnel comprenant
- un substrat fixe;
- un porte-échantillon monté mobile par rapport audit substrat selon trois axes perpendiculaires;
- un bras palpeur suspendu élastiquement par rapport audit substrat susceptible d'être mis en contact avec un point d'une surface d'un échantillon fixé sur le porte-échantillon,
- ledit bras étant pourvu à cet effet d'une pointe tactile déplaçable dans une direction normale à la surface de l'échantillon ;
- le bras palpeur portant également une pointe tunnel placée au voisinage d'une électrode tunnel solidaire du substrat;
- des moyens de régulation comprenant une boucle d'asservissement de la distance séparant ladite pointe tunnel de son électrode, à une valeur prédéterminée correspondant à une valeur de consigne de courant tunnel, ladite boucle engendrant à cet effet un signal d'erreur de courant tunnel destiné à ajuster ladite distance, la valeur intégrée dudit signal d'erreur étant en outre utilisée comme signal représentatif du profil de ladite surface;
- lesdits moyens de régulation comprenant des premiers moyens actionneurs agissant sur ledit bras palpeur pour y exercer une force selon ledit troisième axe en permettant de pré-ajuster à une valeur prédéterminée ladite distance en fonction d'un signal de réglage;
ledit capteur étant caractérisé en ce que
- lesdits moyens de régulation comprennent également des seconds moyens actionneurs agissant également sur ledit bras palpeur pour y exercer un couple de sens opposé à celui engendré par les premiers moyens actionneurs; et en ce que
- ladite boucle de réglage comprend également des moyens pour appliquer ledit signal d'erreur auxdits seconds moyens actionneurs et pour appliquer auxdits premiers moyens actionneurs un signal de commande formé par la différence entre ledit signal de réglage et ledit signal d'erreur.

Grâce à ces caractéristiques, une force exercée par un échantillon sur la pointe tactile et tendant à modifier la distance entre la pointe tunnel et son électrode associée, peut être compensée par les moyens actionneurs intégrés au capteur lui-même, sans qu'il soit nécessaire de déplacer le porte-échantillon selon le troisième axe. Ainsi, ce dernier n'a pas besoin d'une commande ultra-précise dans le domaine des nanomètres selon ce troisième axe, une commande étant seulement nécessaire pour pouvoir approcher initialement le porte-échantillon du capteur. Le mécanisme du porte-échantillon peut ainsi être plus simple que dans la technique antérieure.

En outre, il devient possible de dégager totalement la zone dans laquelle évolue la pointe tactile pour la rendre plus facilement observable.

Selon d'autres caractéristiques avantageuses de l'invention, les moyens actionneurs peuvent être de type électrostatique, magnétique ou thermique.

L'invention a également pour objet un capteur multiple à effet tunnel comprenant une pluralité de capteurs élémentaires tels que définis ci-dessus.

On constate en effet que selon l'invention, par exemple durant le relevé d'un profil de surface, le porte-échantillon n'est entraîné que selon deux axes perpendiculaires permettant le balayage de la surface par la pointe tactile. En revanche, aucun mouvement n'est nécessaire selon la direction de mesure, celui-ci étant pris en charge par le bras palpeur du capteur. Si donc le capteur est de type multiple, chaque capteur élémentaire pourra détecter individuellement les variations de profil auxquelles il est soumis. On comprend qu'une telle détection individuelle de plusieurs capteurs élémentaires juxtaposés ne serait pas possible avec le capteur du brevet européen précité, car dans ce cas, la compensation de la variation de la distance tunnel ne pourrait alors être effectuée qu'en déplaçant le porte-échantillon d'une même valeur simultanément vis-à-vis de tous les capteurs élémentaires. Or, on conçoit l'intérêt d'un capteur multiple qui n'est pas plus difficile à fabriquer qu'un seul capteur, mais qui permet d'effectuer une mesure de profil de façon nettement plus rapide qu'avec un seul.

D'autres caractéristiques et avantages de l'invention apparaîtront au cours de la description qui va suivre, donnée uniquement à titre d'exemple et faite en se référant aux dessins annexés sur lesquels:
- la figure 1 montre une vue schématique explicative en plan d'un capteur à effet tunnel selon le mode de réalisation préféré de l'invention;
- la figure 2 montre une vue schématique en plan du substrat du capteur représenté sur la figure 1, le bras palpeur du capteur n'étant pas représenté;
- les figures 3 et 4 sont des vues schématiques en coupe respectivement selon les lignes III-III et IV-IV de la figure 1;
- la figure 5 est un schéma du capteur et de ses moyens de régulation;
- la figure 6 est une vue en plan analogue à celle de la figure 1 d'un autre mode de réalisation de l'invention;
- la figure 7 est une vue en plan analogue à celle de la figure 2, de ce deuxième mode de réalisation de l'invention;
- les figures 8 et 9 sont des vues en coupe respectivement selon les lignes VIII-VIII et IX-IX de la figure 6;
- les figures 10 à 13, respectivement analogues aux figures 1 à 4 montrent un troisième mode de réalisation de l'invention; et
- les figures 14 à 17, respectivement également analogues aux figures 1 à 4 montrent un quatrième mode de réalisation de l'invention.

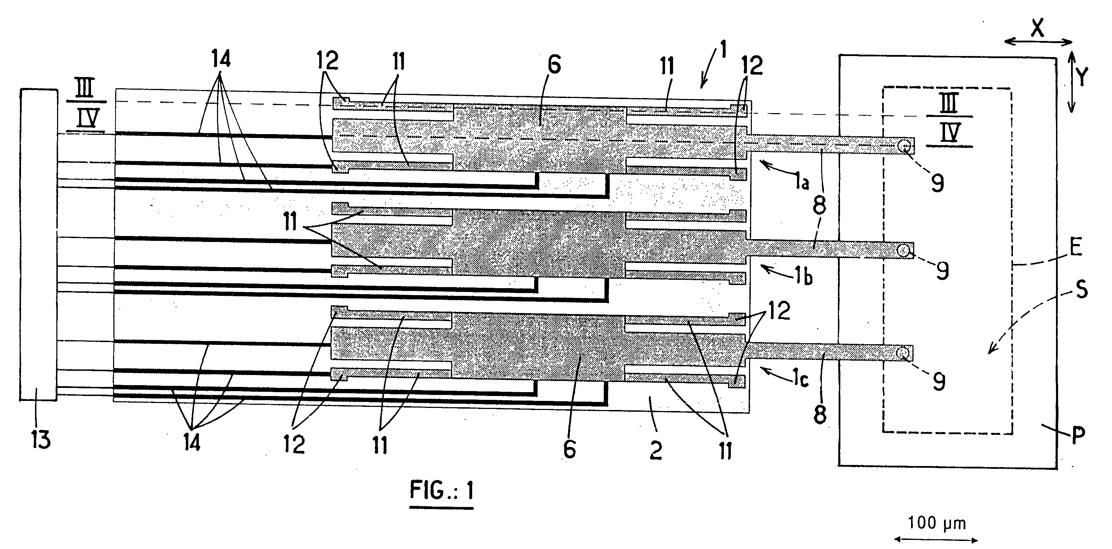

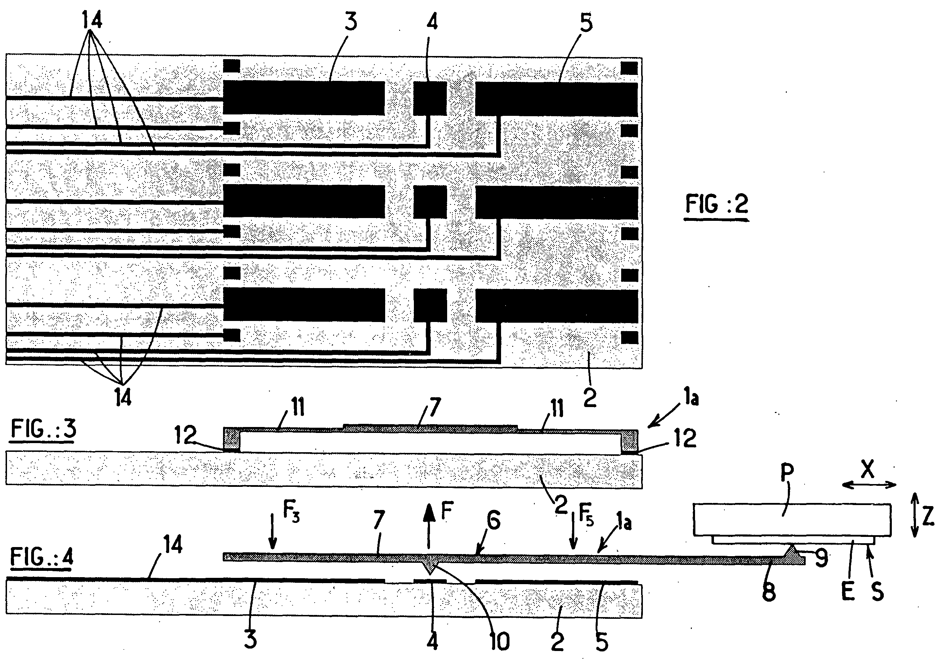

Les figures 1 à 4 représentent un mode de réalisation préféré d'un capteur suivant l'invention. Un échantillon E (visible uniquement sur les figures 1 et 4) est fixé sur un porte-échantillon P, ce dernier pouvant être animé de mouvements selon trois axes perpendiculaires, le mouvement selon l'axe Z (de haut en bas et vice versa dans le plan du dessin de la figure 4) n'ayant, grâce à l'invention, besoin que d'une commande de déplacement grossier, tandis que les autres mouvements du porte-échantillon P doivent pouvoir être commandés à la fois selon un régime grossier et selon un régime relativement fin. De préférence, ces mouvements sont exécutés à l'aide d'actionneurs piézo-électriques bien connus des spécialistes et non représentés aux dessins.

Il est à noter que l'attitude dans l'espace du porte-échantillon P, et par voie de conséquence de l'échantillon E lui-même, peut être quelconque, celle représentée étant arbitraire et ne servant qu'à faciliter l'exposé ci-après.

Le capteur à effet tunnel proprement dit porte la référence générale 1. Il comprend une embase 2 qui peut être un substrat semi-conducteur sur lequel les organes du capteur peuvent être fabriqués par des techniques de photolithographie et d'usinage microminiature, également bien connues des spécialistes.

Dans le mode de réalisation représenté, le capteur représenté est du type multiple et comprend trois capteurs élémentaires 1a, 1b et 1c juxtaposés et identiques qui partagent le même substrat 2. Dans un tel capteur multiple, le nombre de capteurs élémentaires peut être différent de trois et n'est limité que par les contraintes de conception et de fabrication.

Chacun des capteurs élémentaires comporte trois électrodes 3, 4 et 5 déposées sur la surface du substrat 2. Elles sont de forme générale rectangulaire, par exemple.

Chaque capteur élémentaire 1a, 1b et 1c comprend également un bras palpeur 6, relativement rigide, conducteur de l'électricité et formé d'une plaque 7 recouvrant amplement les électrodes 3, 4 et 5 associées et d'une languette 8 qui s'étend dans le prolongement de ce bras hors de l'aire définie par le substrat 2.

Le bras 6 porte à l'une de ses extrémités, c'est-à-dire à l'extrémité libre de la languette 8, une pointe tactile 9 destinée à explorer la surface S de l'échantillon E dont on veut relever la topographie.

Le bras palpeur 6 comprend une seconde pointe 10, dite "pointe tunnel" (figure 4), ici orientée en sens opposé par rapport à la pointe tactile 9 et agencée de telle façon par rapport à l'électrode 4 qu'un courant tunnel puisse être établi passant par l'intervalle entre la pointe tunnel 10 et l'électrode 4. Comme connu en soi, pour que l'on puisse bénéficier de l'effet tunnel entre l'électrode 4 et la pointe 10, il convient que cet intervalle soit extrêmement faible, typiquement de l'ordre de quelques nanomètres seulement. On sait que dans ces conditions, à supposer que le courant s'établisse pour un tel intervalle à une valeur i, une augmentation de celle-ci de seulement O,1 nm donnera lieu à une valeur du courant de 2i, variation qui peut aisément être détectée et exploitée pour commander une boucle de réglage.

Dans chaque capteur élémentaire, le bras palpeur 6 est connecté élastiquement au substrat 2. Dans le présent mode de réalisation, cette liaison élastique est assurée par des lames élastiques 11 disposées latéralement par rapport au bras palpeur 6 et connectées d'une part à celui-ci et d'autre part au substrat 2 en des points d'attache 12. Les lames élastiques 11 sollicitent le bras palpeur 6 dans un sens qui l'éloigne du substrat 2 en engendrant une force résultante F dirigée perpendiculairement par rapport à la surface supérieure du substrat 2 (voir figure 4).

La résultante F des forces qui tendent ainsi dans chaque capteur élémentaire, à éloigner le bras palpeur 6 du substrat 2 est contrebalancée selon l'invention par des moyens de régulation qui comprennent tout d'abord deux actionneurs distincts destinés à engendrer des forces respectivement F₃ et F₅ tendant au contraire à rapprocher le bras palpeur 6 du substrat 2.

Dans l'exemple des figures 1 à 4, ces actionneurs sont de type électrostatique et formés respectivement par les électrodes 3 et 5, en combinaison avec le bras palpeur 6 qui est de préférence au potentiel de la masse. Dans la suite de la description, on désignera ces actionneurs respectivement par les références combinées 3-6 et 5-6.

Les trois électrodes 3, 4 et 5 sont reliées à une boucle d'asservissement 13 par l'intermédiaire de conducteurs respectifs 14 déposés également sur le substrat 2. Une telle boucle d'asservissement est prévue pour chaque capteur élémentaire 1a, 1b et 1c.

On notera que les actionneurs 3-6 et 5-6 engendrent des couples sur le bras palpeur 6 de sens contraires par rapport au point d'articulation virtuel que forment la pointe tunnel 10 et l'électrode 4.

Il est à noter que ce point d'articulation virtuel est caractérisé par l'absence de force d'appui puisqu'il n'y a pas de contact, et qu'en conséquence la rotation du bras autour du point d'articulation virtuel ne s'accompagne d'aucune perte d'énergie mécanique. Ce fait est important pour la précision de la mesure.

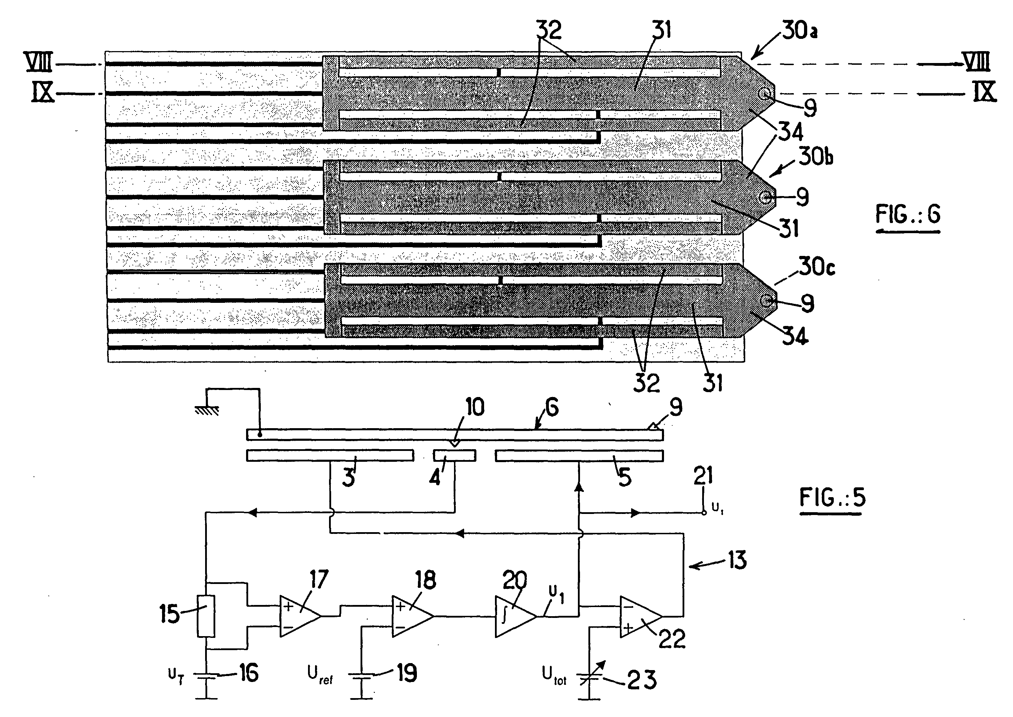

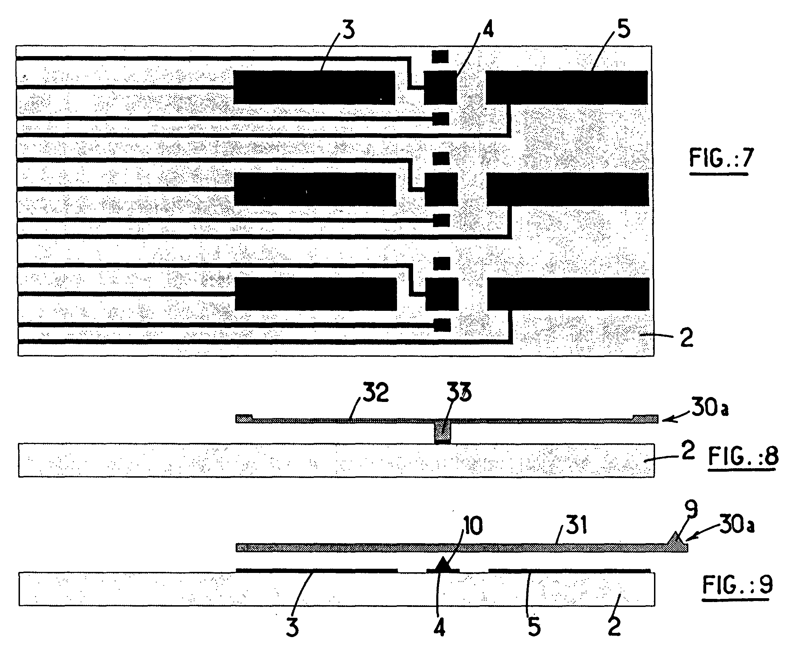

On a représenté sur la figure 5 un exemple de réalisation préféré de la boucle d'asservissement 13. Plus précisément, dans chaque capteur élémentaire, l'électrode 4 est connectée à une résistance de mesure 15, le courant tunnel étant engendré au moyen d'une source 16 fournissant la tension tunnel U_{T}. Ce courant parcourt donc le trajet entre la source de tension 16 et la masse en passant par la résistance 15, l'électrode 4, l'intervalle tunnel, la pointe tunnel 10 et le bras palpeur 6 appartenant au capteur élémentaire concerné, ce bras étant relié à la masse.

Le courant tunnel est mesuré aux bornes de la résistance 15 au moyen d'un amplificateur d'instrumentation 17 dont la sortie est appliquée à l'entrée non inverseuse d'un autre amplificateur d'instrumentation 18 monté en comparateur. L'entrée inverseuse de l'amplificateur 18 est reliée à une source 19 d'une tension de référence U_{ref}, cette dernière représentant la valeur de consigne du courant tunnel.

L'amplificateur 18 fournit ainsi un signal d'erreur représentant l'écart entre le courant tunnel actuel passant par la pointe tunnel par rapport à la valeur de consigne de ce courant tunnel.

La sortie de l'amplificateur d'instrumentation 18 est appliquée à un intégrateur 20 qui fournit à sa sortie une tension U₁. Cette sortie est raccordée tout d'abord à l'électrode 5 et à une sortie de mesure 21 du montage sur laquelle est prélevé le signal utile représentatif de la topographie de la surface S.

La tension U₁ est également appliquée à l'entrée inverseuse d'un autre amplificateur d'instrumentation 22, à l'entrée non inverseuse duquel est connectée une source 23 d'une tension réglable Uₜₒₜ destinée essentiellement à déterminer la force avec laquelle la pointe tactile 9 doit appuyer sur la surface S de l'échantillon E. L'amplificateur opérationnel 22 fournit à sa sortie la tension Uₜₒₜ-U₁ qui est appliquée à l'électrode 3 du capteur élémentaire.

Le fonctionnement de tous les capteurs élémentaires est identique et peut être décrit comme suit.

On suppose tout d'abord que l'ensemble est au repos, la boucle d'asservissement 13 n'étant pas alimentée et le porte-échantillon P étant éloigné de la pointe tactile 9.

Dans ces conditions, les lames élastiques 11 maintiennent le bras palpeur 6 éloigné du substrat 2, l'intervalle au niveau de la pointe tunnel 10 pouvant alors être de 2 à 10 µm, par exemple. Le bras palpeur s'étend alors parallèllement à la surface du substrat 2.

On branche l'alimentation de la boucle d'asservissement 13, les tensions U_{T} et U_{ref} ayant des valeurs préréglées. La tension Uₜₒₜ est réglée à une valeur positive. Par ailleurs, la sortie de l'intégrateur 20 est limitée par construction à des valeurs situées dans une plage allant de zéro à une valeur égale à la tension Uₜₒₜ.

A cet instant, la sortie de l'intégrateur 20 est égale à zéro, et la sortie de l'amplificateur 22 est égale à Uₜₒₜ. Cette tension étant appliquée à l'électrode 3, l'actionneur 3-6 engendre une force F₃ qui rapproche le bras palpeur 6 du substrat 2 tout en le faisant pivoter dans le sens contraire des aiguilles d'une montre, comme vu sur la figure 5. On règle la tension Uₜₒₜ à une valeur telle que la pointe 10 soit à une distance de l'électrode 4 empêchant encore la création d'un courant tunnel, distance qui peut être choisie entre 100 et 1000 nm, par exemple.

Lorsque dans ces conditions, un échantillon E est rapproché de la pointe tactile 9 de manière à y exercer une certaine force, la pointe tunnel 10 se rapproche de l'électrode 4, jusqu'à ce que le courant tunnel soit supérieur à la valeur de consigne représentée par la tension U_{ref}. L'amplificateur 18 engendre alors un signal d'erreur qui devient positif de sorte que l'intégrateur 20 produit une tension croissante à sa sortie. De ce fait, l'amplificateur 22 produit une tension décroissante qui aura pour effet d'augmenter la force F₅ exercée sur le bras palpeur 6 par l'actionneur 5-6 et de diminuer la force F₃ exercée sur celui-ci par l'actionneur 3-6. La force avec laquelle la pointe 9 agit sur le bras palpeur 6 sera ainsi réduite également.

On peut ainsi, en prélevant la tension U₁, obtenir une mesure de la position de la pointe tactile 9. En faisant un balayage de la surface de l'échantillon, il est possible d'en relever la topographie en enregistrant simultanément les signaux de sortie de tous les capteurs élémentaires.

Les figures 6 à 9 représentent une variante du capteur à effet tunnel que l'on vient de décrire. Elle diffère essentiellement du mode de réalisation des figures 1 à 4 en ce que dans chaque capteur élémentaire 30a, 30b et 30c le bras palpeur 31 est flanqué sur toute sa longueur de lames élastiques 32 situées respectivement de part et d'autre de ce bras palpeur 31 auquel elles sont reliées par leurs extrémités. Ces lames élastiques 32 sont fixées au substrat 2 du capteur en leur milieu par l'intermédiaire d'attaches 33. Par ailleurs, la pointe tactile 9 de chaque capteur élémentaire est prévue sur une partie d'extrémité triangulaire 34 de son bras palpeur.

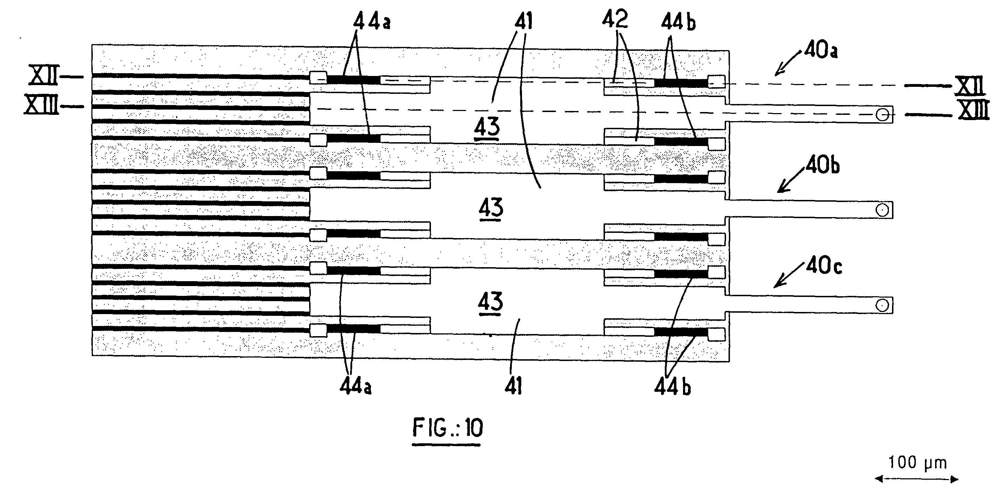

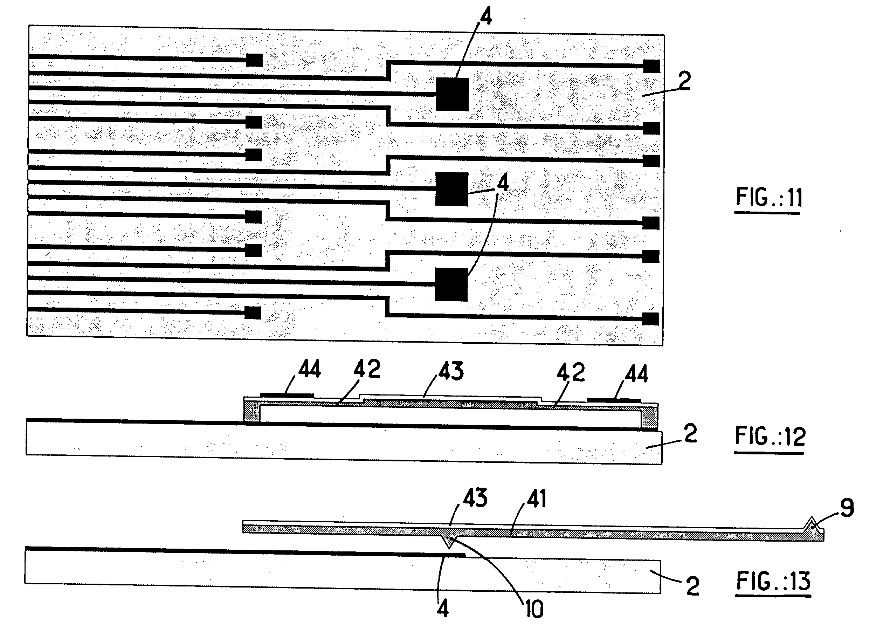

Les figures 10 à 13 représentent un autre mode de réalisation du capteur selon l'invention dans lequel chaque capteur élémentaire 40a, 40b et 40c comporte un bras palpeur 41 suspendu élastiquement de la même façon que le bras palpeur 6 du mode de réalisation des figures 1 à 4 à l'aide de lames élastiques 42. Cependant, dans ce cas, chaque capteur élémentaire comprend des actionneurs de type thermique.

Plus précisément, le bras palpeur 41 ainsi que les lames élastiques 42 rattachant ce bras au substrat 2 sont couvertes d'une couche isolante 43. Sur les parties de cette couche isolante recouvrant les lames élastiques 42 sont déposés des éléments résistifs 44a et 44b formant avec les lames élastiques des actionneurs thermiques à bilame pour permettre la déformation contrôlée des ces lames par des courants électriques qui les traversent. En faisant les adaptations adéquates qui sont à la portée de l'homme de métier, les éléments résistifs 44 peuvent être commandés par une boucle d'asservissement analogue à la boucle 13 de la figure 5 pour assurer le rôle d'actionneur au même titre que les actionneurs 3-6 et 5-6 du mode de réalisation des figures 1 à 4.

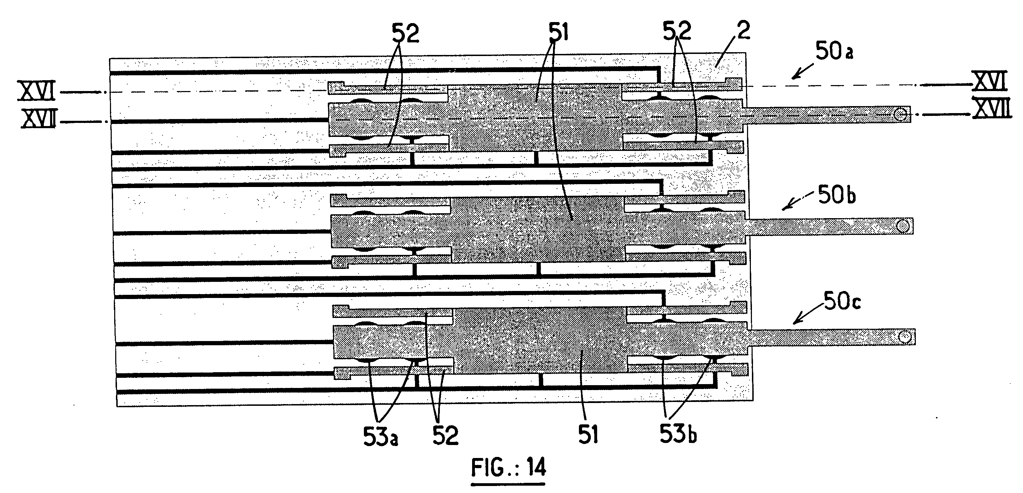

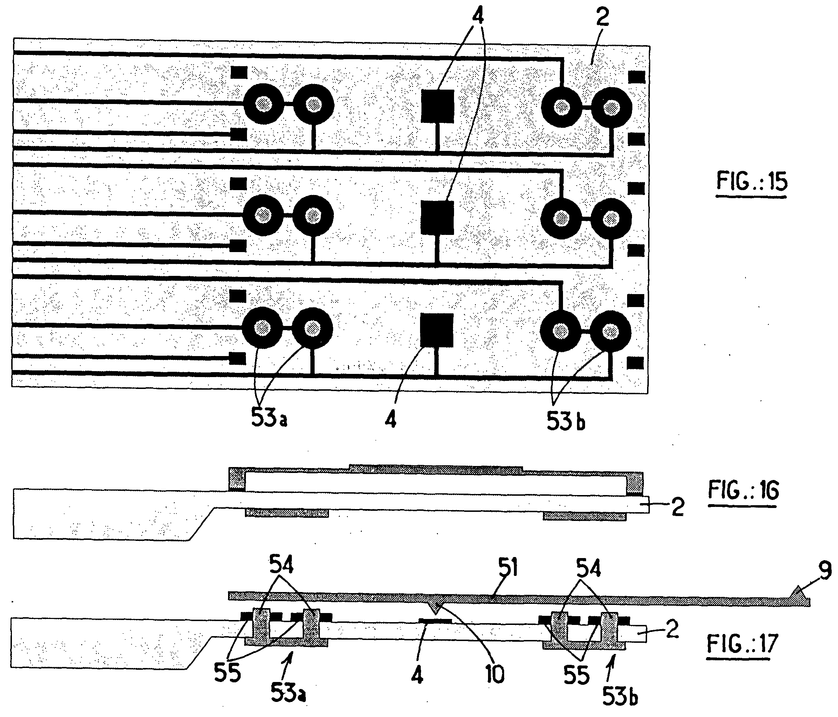

Les figures 14 à 17 représentent encore un quatrième mode de réalisation du capteur suivant l'invention. Dans ce cas, chaque capteur élémentaire 50a, 50b et 50c du capteur multiple comprend un bras palpeur 51 et des lames élastiques 52 identiques à ceux utilisés dans le mode de réalisation des figures 1 à 4. En revanche, les actionneurs sont ici de type magnétique. A cet effet, chaque capteur élémentaire comprend deux circuits magnétiques 53a et 53b (figure 17) situés respectivement en dessous des extrémités du bras palpeur 51 qui sert "d'ancre" à ces circuits magnétiques. Ces circuits magnétiques comportent des pièces polaires 54 qui traversent le substrat 2. Sur la surface de celui-ci en regard du bras palpeur, des bobines 55 sont disposées autour des pièces polaires. Ces bobines peuvent être commandées par un circuit électronique analogue à celui décrit à propos de la figure 5 après une adaptation convenable qui est à la portée des spécialistes. Bien entendu dans ce cas, le capteur comprend un bras palpeur 51 réalisé au moins en partie en une matière ferromagnétique, par exemple un alliage de Ni et de Fe.

Un capteur multiple suivant l'invention pratiquement utilisable peut comprendre 10 capteurs élémentaires disposés parallèlement sur le substrat 2 avec une distance entre eux de 60 µm, par exemple. Chaque bras palpeur peut avoir une plage de mouvement de 2µm en étant commandé individuellement comme décrit ci-dessus. La résolution peut être de 0,1 nm. La pointe tactile peut être en diamant ou revêtue de diamant, avoir un rayon de 10 nm et un demi-angle au sommet de 10°, environ.

Le bras palpeur, pour autant que les trois premiers modes de réalisation décrits soient concernés, peut être réalisé en diamant dopé ce qui confère à la pointe tactile la dureté et la conductibilité requise.

Les forces F₃ et F₅ peuvent se situer entre 1 et 100 nN. Par exemple, avec des électrodes 3 et 5 d'une dimension de 50x200 µm, une force de 350 nN peut être obtenue avec un champ électrique de 2 V/µm.

Le capteur selon l'invention peut être monté sur un circuit intégré CMOS après avoir été fabriqué séparément.

## Revendications

1. Capteur à effet tunnel comprenant
- un substrat fixe (2);
- un porte-échantillon (P) monté mobile par rapport audit substrat (2) selon trois axes perpendiculaires (X, Y, Z);
- un bras palpeur (6; 31; 41; 51) suspendu élastiquement par rapport audit substrat (2) susceptible d'être mis en contact avec un point d'une surface (S) d'un échantillon (E) fixé sur le porte-échantillon (P),
- ledit bras (6; 31; 41; 51) étant pourvu à cet effet d'une pointe tactile (9) déplaçable dans une direction (Z) normale à la surface (S);
- le bras palpeur (6; 31; 41; 51) portant également une pointe tunnel (10) placée au voisinage d'une électrode tunnel (4) solidaire du substrat (2);
- des moyens de régulation comprenant une boucle d'asservissement (13) de la distance séparant ladite pointe tunnel (10) de son électrode (4), à une valeur prédéterminée correspondant à une valeur de consigne de courant tunnel (U_{ref}), ladite boucle (13) engendrant à cet effet un signal d'erreur de courant tunnel (U₁) destiné à ajuster ladite distance, la valeur intégrée (U₁) dudit signal d'erreur étant en outre utilisée comme signal représentatif du profil de ladite surface;
- lesdits moyens de régulation comprenant des premiers moyens actionneurs (3-6; 3-31; 44a; 53a) agissant sur ledit bras palpeur (6; 31; 41; 51) pour y exercer une force (F₃) selon ledit troisième axe perpendiculaire (Z) en permettant de pré-ajuster à une valeur prédéterminée ladite distance en fonction d'un signal de réglage (Uₜₒₜ);
ledit capteur étant caractérisé en ce que
- lesdits moyens de régulation comprennent également de seconds moyens actionneurs (5-6; 5-31; 44b; 53b) agissant également sur ledit bras palpeur pour y exercer un couple (F₅) de sens opposé à celui engendré par les premiers moyens actionneurs; et en ce que
- ladite boucle de réglage (13) comprend également des moyens (18, 20, 22) pour appliquer ledit signal d'erreur auxdits seconds moyens actionneurs et pour appliquer auxdits premiers moyens actionneurs un signal de commande formé par la différence entre ledit signal de réglage (Uₜₒₜ) et ledit signal d'erreur intégré (U₁).

2. Capteur suivant la revendication 1, caractérisé en ce que lesdits actionneurs (3-6; 3-31; 44a; 53a; 5-6; 5-31; 44b; 53b) sont disposés de part et d'autre de ladite pointe tunnel (10).

3. Capteur suivant l'une quelconque des revendications 1 et 2, caractérisé en ce que lesdits actionneurs (3-6; 3-31; 5-6; 5-31) sont de type électrostatique.

4. Capteur suivant l'une quelconque des revendications 1 et 2, caractérisé en ce que lesdits actionneurs (44a, 44b) sont de type thermique.

5. Capteur suivant l'une quelconque des revendications 1 et 2, caractérisé en ce que lesdits actionneurs (53a, 53b) sont de type magnétique.

6. Capteur suivant l'une quelconque des revendications 2 à 5, caractérisé en ce que ladite boucle de réglage (13) comprend un premier amplificateur d'instrumentation (18) qui reçoit respectivement sur ses entrées ledit signal de consigne (U_{ref}) et un signal représentatif dudit courant tunnel, un intégrateur (20) connecté à la sortie dudit premier amplificateur (18) et ayant sa propre sortie reliée audit second actionneur (3-5) et à la sortie (21) du capteur, ainsi qu'un second amplificateur d'instrumentation (22) pour établir la différence entre la sortie de l'intégrateur et ledit signal de réglage (Uₜₒₜ), la sortie dudit second amplificateur étant connectée audit premier actionneur (3-6).

7. Capteur multiple à effet tunnel caractérisé en ce qu'il comporte une pluralité de capteurs juxtaposés suivant l'une quelconque des revendications précédentes.

## Claims

1. A tunnel effect sensor including:
- a fixed substrate (2);
- a sample-holder (P) mobile relative to said substrate (2) along three perpendicular axes (X, Y, Z);
- a feeler arm (6; 31; 41; 51) suspended elastically relative to said substrate (2), adapted to be placed in contact with a point on a surface (S) of a sample (E) fixed to said sample-holder (P);
- said arm (6; 31; 41; 51) being provided to this end with a tactile point (9) that can be moved in a direction (Z) normal to the surface (S);
- the feeler arm (6; 31; 41; 51) also carrying a tunnel point (10) located in the vicinity of a tunnel electrode (4) attached to said substrate (2),
- control means including a control loop (13) for slaving the distance between said tunnel point (10) and its electrode (4) to a predetermined value corresponding to a tunnel current set point value (U_{ref}), said loop (13) generating to this end a tunnel current error signal (U₁) used to adjust said distance, the integrated value (U₁) of said error signal being also used as a signal representative of the profile of said surface;
- said control means comprising first actuator means (3-6; 3-31; 44a; 53a) operating on said feeler arm (6; 31; 41; 51) to apply a force (F₃) to it along said third perpendicular axis (Z) so that said distance can be preset to a predetermined value in accordance with an adjustment signal (Uₜₒₜ);
said sensor being characterized in that
- said control means further comprising second actuator means (5-6; 5-31; 44b; 53b) also operating on said feeler arm to apply to it a torque (F₅) in the direction opposite to that generated by said first actuator means, and in that
- said control loop (13) further comprising means (18, 20, 22) for applying said error signal to said second actuator means and for applying to said first actuator means a control signal formed from the difference between said adjustment signal (Uₜₒₜ) and said integrated error signal (U₁).

2. The sensor as claimed in claim 1, characterized in that said actuators (3-6; 3-31; 44a; 53a; 5-6; 5-31; 44b; 53b) are disposed on respective opposite sides of said tunnel point (10).

3. The sensor as claimed in any one of claims 1 and 2, characterized in that said actuators (3-6; 3-31; 5-6; 5-31) are of the electrostatic type.

4. The sensor as claimed in any one of claims 1 and 2, characterized in that said actuators (44a, 44b) are of the thermal type.

5. The sensor as claimed in any one of claims 1 and 2, characterized in that said actuators (53a, 53b) are of the magnetic type.

6. The sensor as claimed in any one of claims 2-5, characterized in that said control loop (13) includes a first instrumentation amplifier (18) adapted to receive on its inputs said set point signal (U_{ref}) and a signal representative of said tunnel current, an integrator (20) connected to the output of said first amplifier (18) and having its own output connected to said second actuator (3-5) and to the output (21) of the sensor, and a second instrumentation amplifier (22) for establishing the difference between the output of said integrator and said adjustment signal (Uₜₒₜ), the output of said second amplifier being connected to said first actuator (3-6).

7. A multiple tunnel effect sensor, characterized in that it comprises a plurality of juxtaposed tunnel effect sensors, according to any one of the preceding claims.

## Patentansprüche

1. Tunneleffektsensor mit
- einem festgelegten Substrat (2);
- einem Probenträger (P), der bezüglich des Substrates (2) längs dreier senkrechter Achsen (X, Y, Z) beweglich gelagert ist;
- einem bezüglich des Substrates (2) elastisch aufgehängten Fühlerarm (6; 31; 41; 51), der mit einem Punkt einer Oberfläche (6) einer an dem Probenträger (P) befestigten Probe (E) in Anlage bringbar ist,
- wobei der Arm (6; 31; 41; 51) zu diesem Zweck mit einer Tastspitze (9) versehen ist, die in einer zu der Oberfläche (S) normalen Richtung (Z) verstellbar ist;
- wobei der Fühlerarm (6; 31; 41; 51) ferner eine Tunnelspitze (10) aufweist, die benachbart zu einer mit dem Substrat (2) fest verbundenen Tunnelelektrode (4) angeordnet ist;
- Regelmitteln mit einem Regelkreis (13) zum Regeln des Abstandes der die Tunnelspitze (10) von ihrer Elektrode (4) trennt, auf einen vorgegebenen Wert entsprechend einem Tunnelstrom-Sollwert (U_{ref}), wobei der Kreis (13) zu diesem Zweck ein Tunnelstromfehlersignal (U₁) erzeugt, der zum Verstellen des Abstandes dient, wobei der integrierte Wert (U₁) des Fehlersignals ferner als das Profil der die Oberfläche darstellendes Signal verwendet wird;
- wobei die Regelmittel erste Betätigungsmittel (3-6; 3-31; 44a; 53a) aufweist, die auf den Fühlerarm (6; 31; 41; 51) einwirken, um auf ihn eine Kraft (F₃) längs der dritten senkrechten Achse (Z) auszuüben, wobei sie eine Voreinstellung des Abstandes auf einen vorgegebenen Wert in Abhängigkeit von einem Regelsignal (Uₜₒₜ) ermöglichen;
- wobei der Sensor dadurch gekennzeichnet ist, dass
- die Regelmittel ferner zweite Betätigungsmittel (5-6; 5-31; 44b; 53b) aufweisen, die ebenfalls auf den Fühlerarm einwirken, um auf ihn ein Moment (F₅) auszuüben, dessen Richtung entgegengesetzt zu demjenigen ist, das von den ersten Betätigungsmitteln ausgeübt wird; und dass
- der Regelkreis (13) ferner Mittel (18, 22) aufweist, um das Fehlersignal an die zweiten Betätigungsmittel anzulegen und um an die ersten Betätigungsmittel ein Steuersignal anzulegen, das von dem Unterschied zwischen dem Regelsignal (Uₜₒₜ) und dem integrierten Fehlersignal (U₁) gebildet wird.

2. Sensor nach Anspruch 1, dadurch gekennzeichnet, dass die Betätigungsglieder (3-6; 3-31; 44a; 53a; 5-6; 5-31; 44b; 53b) beidseitig zu der Tunnelspitze (10) angeordnet sind.

3. Sensor nach einem der Ansprüche 1 und 2, dadurch gekennzeichnet, dass die Betätigungsglieder (3-6; 3-31; 5-6; 5-31) vom elektrostatischen Typ sind.

4. Sensor nach einem der Ansprüche 1 und 2, dadurch gekennzeichnet, dass die Betätigungsglieder (44a, 44b) vom thermischen Typ sind.

5. Sensor nach einem der Ansprüche 1 und 2, dadurch gekennzeichnet, dass die Betätigungsglieder (53a, 53b) vom magnetischen Typ sind.

6. Sensor nach einem der Ansprüche 2 bis 5, dadurch gekennzeichnet, dass der Regelkreis (13) aufweist: einen ersten Instrumentationsverstärker (18), der an seinen Eingängen das Sollwertsignal (U_{ref}) und ein den Tunnelstrom darstellendes Signal empfängt, einen Integrierer (20), der mit dem Ausgang des ersten Verstärkers (18) verbunden ist und mit seinem eigenen Ausgang an dem zweiten Betätigungsglied (3-5) und dem Ausgang (21) des Sensors verbunden ist, sowie einen zweiten Instrumentationsverstärker (22) zum Erstellen des Unterschiedes zwischen dem Ausgang des Integrierers und dem Regelsignal (Uₜₒₜ), wobei der Ausgang des zweiten Verstärkers mit dem ersten Betätigungsglied (3-6) verbunden ist.

7. Mehrfach-Tunneleffektsensor, dadurch gekennzeichnet, dass er mehrere angrenzend aneinander angeordnete Fühler nach einem der vorhergehenden Ansprüche aufweist.
